# EUROPEAN PATENT APPLICATION

(11) **EP 1 236 387 A1**
(43) Date of publication of application: **04.09.2002**
(21) Application number: 02075777.9
(22) Date of filing: 27.02.2002
(51) Int. Cl.: A01C 15/18, A01C 17/00

(54) **A device for spreading granular and/or pulverulent material**

(30) Priority: 02.03.2001 NL 1017478
(71) Applicant: Lely Enterprises AG, 6300 ZUG (CH)
(72) Inventor: van den Berg, Karel, 2971 BR Bleskensgraaf (NL)
(74) Representative: Corten, Maurice Jean F.M.

(57) **Abstract**

A device for spreading granular and/or pulverulent material, in particular fertiliser. The device comprises a hopper (4) for containing granular and/or pulverulent material, at least one rotatable blade, and a conveyor (7,8). The conveyor (7,8) has an inlet end (9) for receiving granular and/or pulverulent material coming from the hopper (4) and a discharge end (11) for supplying the granular and/or pulverulent material. The discharge end (11) of the conveyor (7,8) is located at a higher level than the inlet end (9).

## Description

The invention relates to a device for spreading granular and/or pulverulent material, in particular fertiliser, according to the preamble of claim 1.

Such a device is known from Dutch patent application NL-A-6908336.

The invention has for its object to provide an alternative device for spreading granular and/or pulverulent material.

According to the invention, for that purpose a device of the above-described type comprises the measures according to the characterizing part of claim 1. Due to this there is achieved on the one hand an improvement of the metering by the conveyor, and on the other hand the material is given a higher speed, which may be extremely advantageous under certain circumstances. The latter measure is realised in that the discharge end is situated at a higher level, so that the granular and/or pulverulent material has to cover a greater distance to reach the blade and is thus accelerated by gravitation.

The speed at which the granular and/or pulverulent material lands on the spreading element, preferably a blade, can be adjusted when the angle at which the conveyor conveys the material upwards is adjustable. There is preferably provided a sensor for measuring the angle of the conveyor. The device is provided in an advantageous manner with angle adjusting means for adjusting the angle of the conveyor.

A preferred embodiment of a device according to the invention is characterized in that the device comprises a channel for guiding granular and/or pulverulent material to the spreading element, the channel having an inlet end for receiving granular and/or pulverulent material coming from the discharge end of the conveyor and a supply end for supplying granular and/or pulverulent material to the spreading element, the inlet end being at least partially located under the discharge end of the conveyor, and the inlet end being located at a higher level than the discharge end. The channel, which may be open or closed, ensures the conveyance of the granular and/or pulverulent material to e.g. the blade, a constant flow of the material being realisable. In particular the supply end of the channel is contiguous to the spreading element. An excellent guiding of the material to the spreading element is thus obtained. Moreover, this ensures that almost no collision between the material and the spreading element, e.g. the blade, takes place, which is advantageous to the spreading of the material.

The channel has preferably such a shape that the granular and/or pulverulent material is accelerated from the inlet end to the supply end. For the purpose of further reducing the drawbacks accompanying the collision between the granular and/or pulverulent material and the blade, the channel is bent for guiding the material in a desired direction.

The speed at which the material is conveyed to the spreading element can be adjusted when the angle at which the channel conveys the material downwards is adjustable.

The so-called dropping point of the material on the spreading element can be adjusted in a simple manner when the position of the supply end relative to the blade is adjustable. The device is preferably provided with a sensor for measuring the position of the supply end relative to the spreading element. It is advantageous when the device is provided with channel adjusting means for adjusting the position of the channel.

An embodiment of a device according to the invention is characterized in that the conveyor is constituted by a tube in which an auger is disposed. In practice it has appeared that an auger acting as a conveyor has advantages in comparison with other types of conveyor, such as conveyor belts.

The auger is preferably driven by a motor independently of the blade. Due to this inter alia a hopper for granular and/or pulverulent material can be emptied in a simple manner without the need of activating the spreading element.

If there is provided a sensor for measuring the number of revolutions per minute of the auger, measures can be taken in dependence of the measured value. When for example the number of revolutions per minute of the auger suddenly decreases to below a threshold value, or decreases too quickly, this may be an indication of a greater torque as a result of overloading. In this situation a signal may be given to stop the rotation of the auger and the action of the spreading element. Moreover, the rotation may be controlled by a calculating member or by control means, so that the number of revolutions per minute can be adjusted or adapted in dependence of inputted, read and measured momentary values.

An extremely accurate and reproducible metering is obtained when the inner side of the tube has a rough surface. This is preferably realised in that on the inner side of the tube there are provided strips extending in the longitudinal direction of the tube. In this manner existing tubes can be adapted in a simple manner. In order to prevent wear of the auger, the latter is preferably made from stainless steel.

According to the invention, caking or sticking of granular and/or pulverulent material to the channel is prevented when the device is provided with heating means for heating the tube. The device is preferably provided with a liquid detector for detecting liquid in the tube and for supplying control signals to the heating means for putting them into operation.

An extremely accurate and user-friendly device is obtained when there are provided control means, in particular comprising a computer, having an input means for inputting data. There is preferably provided a calculating member for calculating the control signals to be issued by the control means. The control means may i.a. be suitable for controlling angle adjusting means for the auger, the channel, the blade with the aid of data from the sensor and inputted data, and further for controlling the drive of the conveyor and the like.

The invention will be explained hereinafter in further detail by way of example with reference to embodiments shown in the drawing, in which:
Figure 1 is a schematic side view of a fertiliser spreader according to the invention;
Figure 2 is a schematic plan view of the fertiliser spreading according to Figure 1, and
Figure 3 is a schematic view of control means to be used in a fertiliser spreader according to an embodiment of the invention.

The invention will be explained in further detail with reference to a fertiliser spreader as a device for spreading granular and/or pulverulent material. However, it will be obvious that the invention may also be applied to a device for spreading other granular and/or pulverulent material, such as salt for icy roads, sand, pesticides, herbicides and the like. The invention will also be described with reference to a device having a blade acting as a spreading element, although it will be obvious that other spreading elements may be applied as well. Further it will be obvious that the invention is not limited to the embodiments shown in the figures, but that within the scope of the claims other embodiments are possible as well.

The invention will be described hereinafter with reference to blades disposed on a spreading disc. However, it will be obvious that also self-supporting blades or blades mounted in another manner constitute part of the invention.

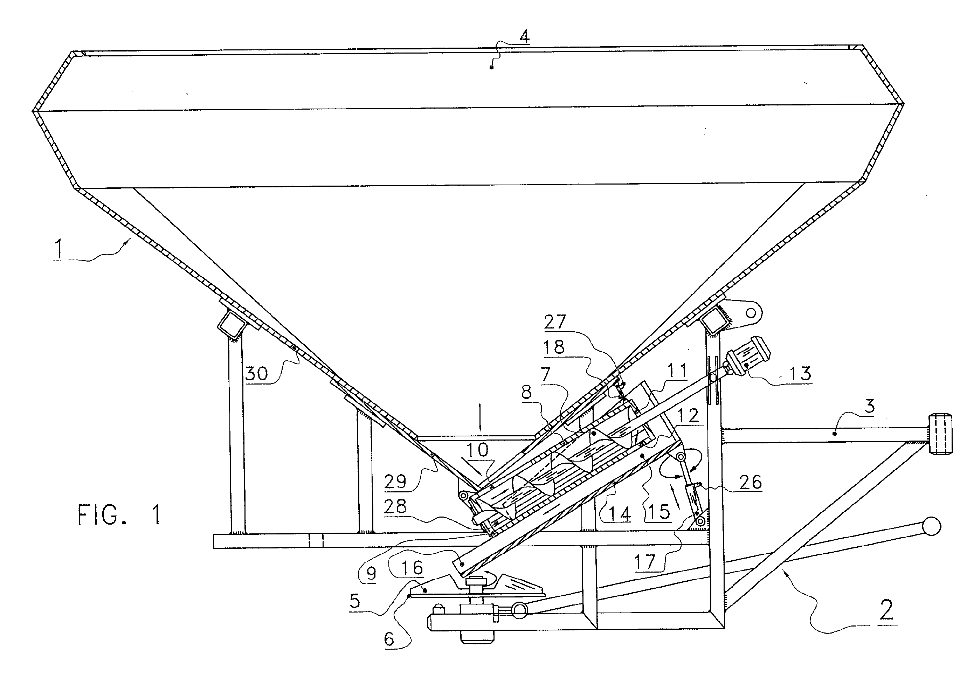

Figure 1 is a schematic side view of a fertiliser spreader 1, which is capable of being fastened, via a carrier frame 2, to a carrier device of a pulling vehicle. It will be obvious that the fertiliser spreader may alternatively be supported by a wheel set.

The fertiliser spreader 1 comprises a hopper 4 for fertiliser. Under the hopper 4 there is disposed a spreading disc 6 having at least one blade 5.

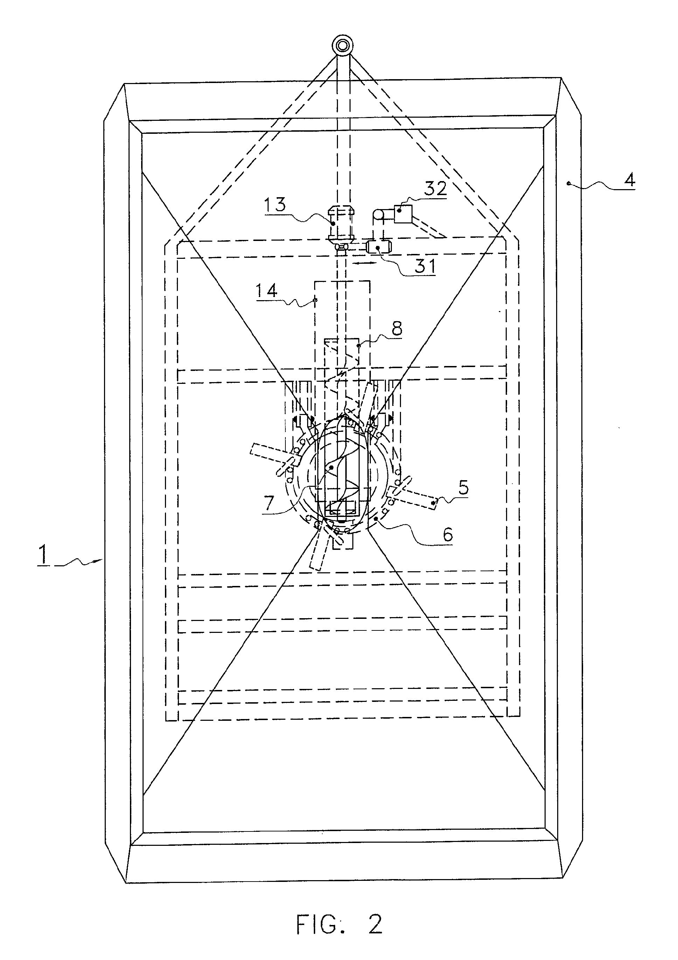

Figure 2 is a schematic plan view of a fertiliser spreader 1 according to the invention, the spreading disc 6 being disposed centrally under the hopper 4, so that a compact construction is obtained. For the purpose of transporting the fertiliser from the hopper 4 to the spreading disc 6, especially the blade 5, there is provided a conveyor, preferably an auger 7 disposed in a tube 8. The tube 8 has an inlet end 9 with an inlet opening 10 for receiving granular and/or pulverulent material coming from the hopper 4 and a discharge end 11 with a discharge opening 12 for supplying the granular and/or pulverulent material. The auger 7 is preferably bearing-supported at two sides in the tube 8. The auger 7 is driven by a motor 13 rotating the auger 7 preferably independently of the spreading disc 6. The number of revolutions per minute of the auger 7 is determinative for the flow of the granular and/or pulverulent material. Further there need not be provided a flap for closing the hopper when spreading does not take place. The supply of material to the blade can simply be stopped by stopping the drive of the auger 7.

According to the invention the discharge end 11 of the tube 8 is located at a higher level than its inlet end 9, so that the fertiliser is conveyed upwards and there is i.a. obtained a better metering.

The inner side of the tube 8 has a rough surface for providing an improved conveyance of the fertiliser in the tube. This is especially realised by providing on the inner wall of the tube 8 (Figure 1) strips 28 extending in the longitudinal direction of the tube 8. An extremely long life and a proper conveyance are obtained when using an auger 7 of stainless steel.

Although the spreading disc 6 may be located under the discharge opening of the tube 8, i.a. for reasons of compactness of the construction there is preferably provided a channel 14 guiding the material from the discharge opening 12 to the blade 5. The channel 14 has an inlet end 15 for receiving granular and/or pulverulent material coming from the discharge end 11 of the tube 8 and a supply end 16 for supplying granular and/or pulverulent material to the blade 5. The inlet end 15 is at least partially located under the discharge end 11 of the tube 8. During operation the inlet end 15 is located at a higher level than the supply end 16. Owing to this construction the granular and/or pulverulent material has a relatively high speed when hitting the blade 5, which is i.a. advantageous to the spreading behaviour. Further, as is apparent from Figure 1, the supply end 16 of the channel 14 is contiguous to the blade 5, so that an excellent guiding of the material to the blade 5 is obtained.

The channel 14 may be cylindrical with a constant diameter from the inlet end 15 to the supply end 16. When the channel 14, which may be open as well as closed, has a narrowing diameter towards the supply end 16, the material is accelerated from the inlet end 15 to the supply end 16. Other shapes of the channel having an accelerating action may be used as well.

The force with which the fertiliser hits the blade 5 is reduced when the supply end 16 of the channel 14 is bent in the desired direction, i.e. in the direction of rotation of the blade 5. In this situation the channel 14 is also capable of ensuring that the fertiliser is correctly guided onto the blade 5.

For the purpose of reducing the collision between the fertiliser and the blade 5, additional or alternative measures may be taken, such as e.g. having the channel 14 extend more steeply. The angle at which the channel 14 conveys the material downwards is then preferably adjustable, e.g. with the aid of channel angle adjusting means 17 (see Figure 1). Further it is possible to set the channel into vibration with the aid of vibrators, and/or to shift the channel in a reciprocating manner in longitudinal direction, and/or to obtain an acceleration of the fertiliser in the channel by means of air that is forced in the flow direction of the fertiliser. In this situation, of course, the internal surface of the channel should preferably be as smooth as possible.

Auger angle adjusting means 18 are provided for adjusting the angle of the tube 8 and the auger 7 disposed therein. In this situation, for obtaining desired spread patterns, a desired working range or the like, the adjusting means for the channel angle and auger angle are capable of being activated independently of each other, so that the relevant angle is adjustable per type of fertiliser, in dependence of e.g. working range.

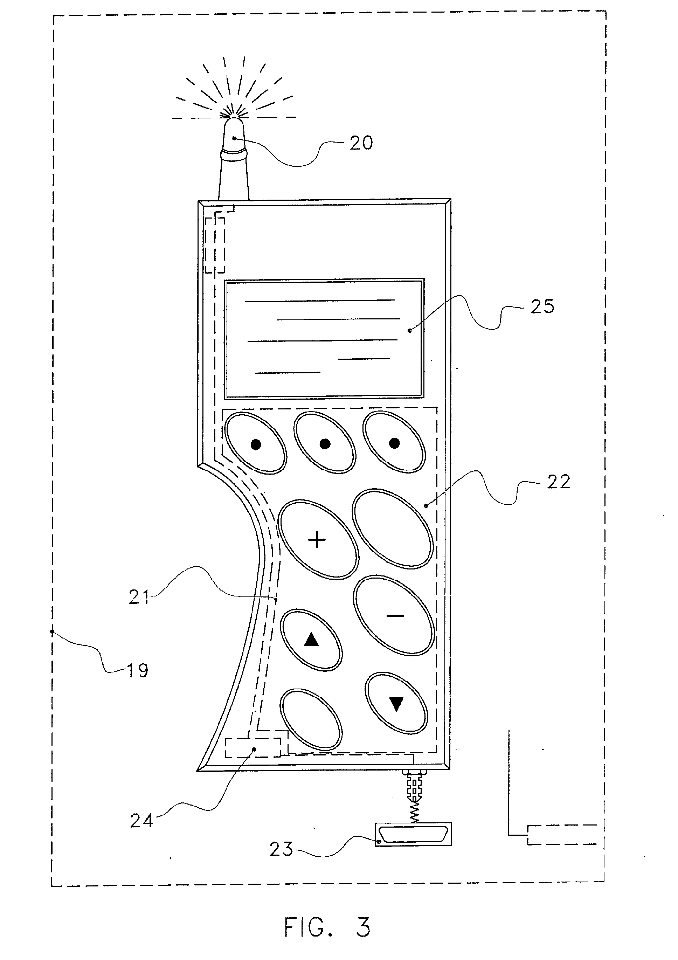

For the purpose of having the fertiliser spreader operate in a user-friendly manner and at a high degree of automation, there are provided control means 19 for controlling the angle adjusting means 17 and 18. Such control means 19 are schematically shown in Figure 3. They comprise a transmitter 20 for transmitting control signals. The control signals are received by a (non-shown) receiver disposed in the vicinity of the angle adjusting means 17, 18. After having received the control signals, the receiver controls the angle adjusting means in such a manner that the desired value of the angle is achieved.

The control means 19 may comprise a computer 21 which is provided with an input means 22, 23 for inputting data. On the basis of the inputted data a calculating member 24 calculates control signals for operating the angle adjusting means 17, 18. In this situation the calculating member 24 may use e.g. a correspondence table stored in a memory. The values included in the correspondence table may e.g. have been determined on the basis of spreading tests with fertiliser. The input of data can take place manually by making use of a keyboard 22, touch screen, or the like. Thus it is possible to determine the number of revolutions per minute of the auger e.g. by means of an operating test known per se.

A display screen 25 is used for checking the input of the data, but may also be used for making the adjustments of e.g. the channel angle more user-friendly. For example, by correctly programming it is possible to request the user to input the necessary data, so that no actions will be omitted. For example on the display screen 25 may appear the request to adjust the working range, to input the type and weight of the fertiliser, and the like. In dependence of the correspondence table, the adjustment of the channel angle can then take place in a completely computer-controlled manner.

The input of data, especially in relation to the fertiliser, is performed in a simple manner when the input means comprise a scanning device 23 for a code, in particular a bar code, said bar code being provided on a container, e.g. a bag, of fertiliser. Said code represents data in relation to the contents of the container. Said data at least relate to one of the characteristics belonging to the group consisting of the weight, the spreading in weight, the granule size, the spreading in granule size. The scanning device 23 is then used to read the bar code on the container, and the correct data are then stored automatically in the control means.

For the purpose of checking the adjustment of the angle of the channel 14 and the tube 8, there are provided sensors 26, 27. When the measured adjustment deviates from the inputted values, or the adjustment calculated on the basis thereof, it is then possible for the control means 19 automatically to adapt the angle adjusting means 17, 18.

The point where the fertiliser is supplied to the blade 5, called dropping point, is determined by the place of the supply end 16 of the channel 14, in other words by the angle assumed by the channel 14 in the horizontal plane. Said angle is adjustable, e.g. by a cylinder 31 (Figure 2). The dropping point can thus be adjusted by operating the cylinder 31. Also this adjustment can be controlled by the control means 19 in dependence of inputted data. Also in this situation feedback is possible when there is provided a sensor 32 for measuring the angle of the channel 14 in a horizontal plane, said sensor 32 supplying signals to the control means 19.

As known per se, by changing the dropping point the spread pattern is changed, so that edges of the area to be spread can be spread in a simple manner. It should be noted that with a two-disc-fertiliser spreader the dropping point per spreading disc can be adjusted separately, and that it is also possible to drive the augers independently of each other, e.g. at different numbers of revolutions per minute.

It is known per se to measure the weight and in particular the decrease in weight of the hopper during use by means of a weighing device. Especially the embodiment shown in Figures 1 and 2 is suitable therefor. The fertiliser spreader 1 is then suspended from the three point lifting hitch of the tractor, via a (schematically indicated) weighing trestle 3 known per se. The number of revolutions per minute of the auger 7 can then be controlled by the control means 19 with the aid of data from the weighing trestle 3. For checking purposes there is preferably provided an rpm-sensor for the auger.

For the purpose of being able to check the functioning of the auger 7, the control means 19, in particular the correspondence table thereof, are provided with a lower threshold (and possibly also with an upper threshold) with which the measured number of revolutions per minute is compared. Said rpm-sensor may be used to issue a signal when the spreading disc 6 is not rotating, whereas the auger 7 is rotating. Further the number of revolutions per minute of the auger 7 is relevant to the determination of the quantity of fertiliser supplied to the spreading disc 6. By measuring the number of revolutions per minute of the auger 7 it is thus possible to realise a check, and preferably, if required, an adaptation of the quantity of fertiliser to be supplied.

Furthermore, analysis of the measured number of revolutions per minute of the auger 7 may be used for safety purposes, in particular when said analysis shows that the number of revolutions per minute has come below a lower threshold or when the number of revolutions per minute suddenly decreases. If these situations occur, the motor 13 may be put out of operation and, if required, also the motor for driving the spreading disc 6.

In the embodiment as shown in Figure 1 the hopper 4 has a lower portion 29 and an upper portion 30, the lower portion 29 being rotatable relative to the upper portion 30. In this situation the tube 8 with the auger 7, the lower portion 29 of the hopper 4 and the channel 14 constitute an integral whole. However, it should be noted that the construction is such that the angle adjustments of the tube 8 and the channel 14 may be such that mutual changes of position remain possible.

The invention is not limited to the above-described embodiments, and it will be obvious that numerous modifications are possible within the scope of the claims. The fertiliser spreader 1 may for example be provided with heating means for heating the tube 8 respectively the channel 14, for the purpose of preventing caking of fertiliser. There may then be provided a liquid detector for detecting liquid in the tube (respectively the channel) and for supplying control signals to the control means that control the heating means. Furthermore, by means of the shape chosen for the discharge opening 12 it is possible to influence the flow of the fertiliser. In dependence of the wishes, a rectangular, triangular or oval opening may be chosen. The flow of fertiliser may further be influenced by the pitch of the auger. A constant pitch results in a different flow of fertiliser than a varying pitch. Further, the decrease in weight may be measured by measurement on the channel instead of measurement of the decrease in weight of the hopper. For that purpose flow sensors or weight sensors known per se may be used. Instead of measuring the number of revolutions per minute of the auger, alternatively the torque or the electricity consumption of the motor 13 may be used. For the purpose of cleaning the channel it is advantageous when the latter can be pivoted into a position that can easily be reached.

## Claims

1. A device (1) for spreading granular and/or pulverulent material, in particular fertiliser, comprising a hopper (4) for containing granular and/or pulverulent material, at least one element (5) spreading the material, a conveyor (7, 8) having an inlet end (9) for receiving granular and/or pulverulent material coming from the hopper (4) and a discharge end (11) for supplying the granular and/or pulverulent material, **characterized in that** the discharge end (11) of the conveyor (7, 8) is located at a higher level than the inlet end (9).

2. A device (1) as claimed in claim 1, **characterized in that** the angle at which the conveyor (7, 8) conveys the material upwards is adjustable.

3. A device (1) as claimed in claim 2, **characterized in that** there is provided a sensor (27) for measuring the angle of the conveyor (7, 8).

4. A device (1) as claimed in claim 2 or 3, **characterized in that** the device (1) is provided with angle adjusting means (18) for adjusting the angle of the conveyor (7, 8).

5. A device (1) as claimed in claim 4, **characterized in that** the device (1) is provided with control means (19) for controlling the angle adjusting means (18) with the aid of data from the sensor (27) and inputted data.

6. A device (1) as claimed in any one of the preceding claims, **characterized in that** the device (1) comprises a channel (14) for guiding granular and/or pulverulent material to the spreading element (5), said channel (14) having an inlet end (15) for receiving granular and/or pulverulent material coming from the discharge end (11) of the conveyor (7, 8) and a supply end (16) for supplying granular and/or pulverulent material to the spreading element (5), the inlet end (15) being located at least partially under the discharge end (11) of the conveyor (7, 8), and the inlet end (15) being located at a higher level than the supply end (16).

7. A device (1) as claimed in claim 6, **characterized in that** the supply end (16) of the channel (14) is contiguous to the spreading element (5).

8. A device (1) as claimed in claim 6 or 7, **characterized in that** the channel (14) has such a shape that material is accelerated from the inlet end (15) to the supply end (16).

9. A device (1) as claimed in claim 6, 7 or 8, **characterized in that** the channel (14) is bent for the purpose of guiding the material in a desired direction.

10. A device (1) as claimed in any one of the preceding claims 6 through 9, **characterized in that** the angle at which the channel (14) conveys the material downwards is adjustable.

11. A device (1) as claimed in claim 10, **characterized in that** there is provided a sensor (17) for measuring the angle of the channel (14).

12. A device (1) as claimed in any one of the preceding claims 6 through 11, **characterized in that** the position of the supply end (16) is adjustable relative to the spreading element (5).

13. A device (1) as claimed in claim 12, **characterized in that** the device (1) is provided with a sensor (32) for measuring the position of the supply end (16) relative to the spreading element (5).

14. A device (1) as claimed in any one of the preceding claims 9 through 13, **characterized in that** the device (1) is provided with channel adjusting means (31) for adjusting the position of the channel (14).

15. A device (1) as claimed in claim 14, **characterized in that** the device (1) is provided with control means (19) for controlling the channel adjusting means (31) with the aid of data from the sensor (32) and inputted data.

16. A device (1) as claimed in any one of the preceding claims, **characterized in that** the hopper (4) has a lower portion (29) and an upper portion (30), the lower portion (29) being rotatable relative to the upper portion (30).

17. A device (1) as claimed in claim 16, **characterized in that** the conveyor (7, 8) and the lower portion (29) of the hopper (4) constitute an integral whole.

18. A device (1) as claimed in claim 17, **characterized in that** the channel (14) constitutes an integral whole with the conveyor (7, 8) and the lower portion (29) of the hopper (4).

19. A device (1) as claimed in any one of the preceding claims, **characterized in that** the conveyor (7, 8) is constituted by a tube (8) in which an auger (7) is disposed.

20. A device (1) as claimed in claim 19, **characterized in that** the auger (7) is driven by a motor (13) independently of the spreading element (5).

21. A device (1) as claimed in claim 20, **characterized in that** there is provided a sensor for measuring the number of revolutions per minute of the auger (7).

22. A device (1) as claimed in claim 21, **characterized in that** there are provided control means (19) for comparing the measured number of revolutions per minute of the auger (7) with a lower threshold.

23. A device (1) as claimed in any one of the preceding claims 18 through 22, **characterized in that** the inner side of the tube (8) has a rough surface.

24. A device (1) as claimed in claim 23, **characterized in that** there are provided strips (28) on the inner wall of the tube (8), said strips extending in the longitudinal direction of the tube (8).

25. A device (1) as claimed in any one of the preceding claims 18 through 24, **characterized in that** the auger (7) is made from stainless steel.

26. A device (1) as claimed in any one of the preceding claims 18 through 25, **characterized in that** the device (1) is provided with heating means for heating the tube (8).

27. A device (1) as claimed in claim 26, **characterized in that** the device (1) is provided with a liquid detector for detecting liquid in the tube (8), and for issuing control signals to the heating means.

28. A device (1) as claimed in any one of the preceding claims, **characterized in that** the device (1) is provided with a weighing device for weighing the quantity of material used during the use of the device (1), the drive of the conveyor (7) being controlled with the aid of data from the weighing device.

29. A device (1) as claimed in any one of the preceding claims, **characterized in that** the spreading element is constituted by a blade (5).
